# EUROPEAN PATENT APPLICATION

(11) **EP 2 682 505 A1**
(43) Date of publication of application: **08.01.2014**
(21) Application number: 12175262.0
(22) Date of filing: 06.07.2012
(51) Int. Cl.: D01F 6/06, C08F 4/651, C08F 10/06

(54) **POLYPROPYLENE FIBER**

(71) Applicant: Basell Poliolefine Italia S.r.l., 20127 Milano (IT)
(72) Inventor: Galvan, Monica, 45030 S.Maria Maddalena (RO) (IT); Neumann, Andreas, 44121 Ferrara (IT); Pantaleoni, Roberto, 44122 Ferrara (IT); Mazzucco, Antonio, 44121 Ferrara (IT); Fusco, Ofelia, 44123 Ferrara (IT); Gaddi, Benedetta, 44122 Ferrara (IT); Collina, Gianni, 44044 Ferrara (IT)
(74) Representative: Colucci, Giuseppe

(57) **Abstract**

Fibers comprising a polypropylene obtainable by a process comprising the steps of:
(i) polymerizing propylene in the presence of a catalyst system comprising the product obtained by contacting the following components:
(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound,
to obtain a polypropylene precursor having a melt flow rate MFR1;

(ii) subjecting the thus-obtained polypropylene precursor to visbreaking to obtain a visbroken polypropylene having a melt flow rate MFR2;
(iii) spinning the visbroken polypropylene obtained in the previous step;

wherein MFR2 is comprised between from 15 to 40 g/10min, the ratio MFR2/MFR1 is comprised between 8 and 18, both MFR1 and MFR2 being measured according to ISO method 1133 (230° C, 2.16 kg).

## Description

The present invention relates to polypropylene fibers and to fabrics obtainable from such fibers. Polypropylene has been since long extruded into fibers. International patent application WO95/032091, for example, discloses fibers comprising a homo or copolymer of propylene having a melting point in the range from 100°C to 145°.

Despite polypropylene fibers have been known for decades, there is still a wish to improve their properties. Also, due to recent regulatory restrictions on phthalates, it is desirable to make available polypropylene fibers that are free from phthalate residues coming from typical Ziegler-Natta catalysts used for their preparation.

Therefore, the present invention sets out to provide novel polypropylene fibers having an improved set of properties, particularly of mechanical properties, combined with the absence of phthalate residues.

It has now been found that those and other results can be achieved by using a polypropylene obtained by using a specific class of Ziegler/Natta catalysts.

Thus, according to a first aspect, the present invention provides a fiber comprising a polypropylene obtainable by a process comprising the steps of:
(i) polymerizing propylene in the presence of a catalyst system comprising the product obtained by contacting the following components:
   (a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
   (b) an aluminum hydrocarbyl compound, and
   (c) optionally an external electron donor compound, to obtain a polypropylene precursor having a melt flow rate MFR1;
(ii) subjecting the thus-obtained polypropylene precursor to visbreaking (controlled chemical degradation) to obtain a visbroken polypropylene having a melt flow rate MFR2;
(iii) spinning the visbroken polypropylene obtained in the previous step;
   wherein MFR2 is comprised between from 15 to 40 g/10min, the ratio MFR2/MFR1 is comprised between 8 and 18, both MFR1 and MFR2 being measured according to ISO method 1133 (230° C, 2.16 kg).

The definition of fibers includes any manufactured products similar to fibers, such as fibrils and cut filaments (staple fibers).

The polypropylene for use in preparing the fibers of the invention has the following preferred features:
- melt flow rate after visbreaking (MFR2) preferably comprised between 20 and 30 g/10', more preferably between 22 and 25 g/10';
- ratio MFR2/MFR1 of melt flow rates after/before visbreaking preferably comprised between 10 and 15, more preferably between 12 and 14;
- a xylene insolubility preferably higher than 95%, more preferably higher than 96% and even more preferably higher than 97%;
- a molecular weight distribution, expressed by the M̅w/M̅n ratio, measured by GPC, preferably comprised between 3.0 and 12.0, more preferably between 3.5 and 7.0;
- a value of M̅z/M̅w ratio, measured by GPC, preferably comprised between 1.0 and 3.0, more preferably between 1.5 and 2.5.

The polypropylene for use in the preparation of the fibers of the present invention is preferably a homopolymer, but can contain minor amounts of comonomer units deriving from ethylene and/or other alpha-olefins such as C4-C10 alpha-olefins. The amount of comonomer units, when present, generally ranges from 0.1 to 2% by weight, preferably it ranges from 0.2 to 1.5% by weight.

The fibers of the present invention can also contain additives commonly employed in the art, such as antioxidants, light stabilizers, heat stabilizers, nucleating agents, colorants and fillers.

The visbreaking, or controlled chemical degradation, step (ii) can be carried out by treating the precursor polypropylene with appropriate amounts, preferably from 0.001 to 0.20 wt%, more preferably from 0.05 to 0.1 wt%, of free radical initiators according to processes well-known in the art. Preferably, the chemical degradation is carried out by contacting under high shear conditions the polymeric material with at least one free radical initiator at a temperature equal to or higher than the decomposition temperature of the free radical initiator. Preferred free radical initiators are peroxides having a decomposition temperature higher than 250°C preferably ranging from 150° to 250°C, such as di-tert-butyl peroxide, dicumyl peroxide, the 2,5-dimethyl-2,5-di (tert-butylperoxy)hexyne, and 2,5-dimethyl-2,5-di(tert-butylperoxy)hexane (traded by Akzo or Arkema under the name Trigonox 101 or Luperox 101 respectively).

In the solid catalyst component (a) the succinate is preferably selected from succinates of formula (I) below: 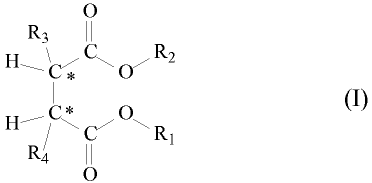 in which the radicals R₁ and R₂, equal to, or different from, each other are a C₁-C₂₀ linear or branched alkyl, alkenyl, cycloalkyl, aryl, arylalkyl or alkylaryl group, optionally containing heteroatoms; and the radicals R₃ and R₄ equal to, or different from, each other, are C₁-C₂₀ alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)

R₁ and R₂ are preferably C₁-C₈ alkyl, cycloalkyl, aryl, arylalkyl and alkylaryl groups. Particularly preferred are the compounds in which R₁ and R₂ are selected from primary alkyls and in particular branched primary alkyls. Examples of suitable R₁ and R₂ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the R₃ and/or R₄ radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II) 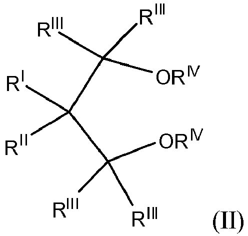 where R^{I} and R^{II} are the same or different and are hydrogen or linear or branched C₁-C₁₈ hydrocarbon groups which can also form one or more cyclic structures; R^{III} groups, equal or different from each other, are hydrogen or C₁-C₁₈ hydrocarbon groups; R^{IV} groups equal or different from each other, have the same meaning of R^{III} except that they cannot be hydrogen; each of R^{I} to R^{IV} groups can contain heteroatoms selected from halogens, N, O, S and Si.

Preferably, R^{IV} is a 1-6 carbon atom alkyl radical and more particularly a methyl while the R^{III} radicals are preferably hydrogen. Moreover, when R^{I} is methyl, ethyl, propyl, or isopropyl, R^{II} can be ethyl, propyl, isopropyl, butyl, isobutyl, tert-butyl, isopentyl, 2-ethylhexyl, cyclopentyl, cyclohexyl, methylcyclohexyl, phenyl or benzyl; when R^{I} is hydrogen, R^{II} can be ethyl, butyl, sec-butyl, tert-butyl, 2-ethylhexyl, cyclohexylethyl, diphenylmethyl, p-chlorophenyl, 1-naphthyl, 1-decahydronaphthyl; R^{I} and R^{II} can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III) 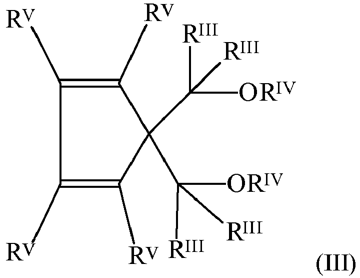 where the radicals R^{IV} have the same meaning explained above and the radicals R^{III} and R^{V} radicals, equal or different to each other, are selected from the group consisting of hydrogen; halogens, preferably Cl and F; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals and two or more of the R^{V} radicals can be bonded to each other to form condensed cyclic structures, saturated or unsaturated, optionally substituted with R^{VI} radicals selected from the group consisting of halogens, preferably Cl and F; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; said radicals R^{V} and R^{VI} optionally containing one or more heteroatoms as substitutes for carbon or hydrogen atoms, or both.

Preferably, in the 1,3-diethers of formulae (I) and (II) all the R^{III} radicals are hydrogen, and all the R^{IV} radicals are methyl. Moreover, are particularly preferred the 1,3-diethers of formula (II) in which two or more of the R^{V} radicals are bonded to each other to form one or more condensed cyclic structures, preferably benzenic, optionally substituted by R^{VI} radicals. Specially preferred are the compounds of formula (IV): 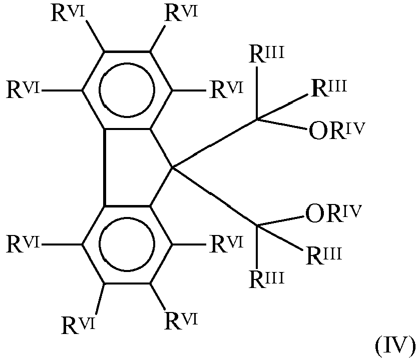 where the R^{VI} radicals equal or different are hydrogen; halogens, preferably Cl and F; C₁-C₂₀ alkyl radicals, linear or branched; C₃-C₂₀ cycloalkyl, C₆-C₂₀ aryl, C₇-C₂₀ alkylaryl and C₇-C₂₀ aralkyl radicals, optionally containing one or more heteroatoms selected from the group consisting of N, 0, S, P, Si and halogens, in particular Cl and F, as substitutes for carbon or hydrogen atoms, or both; the radicals R^{III} and R^{IV} are as defined above for formula (II).

Specific examples of compounds comprised in formulae (II) and (III) are: 1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene; 1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene; 1,1-bis(methoxymethyl)-3,6-dimethylindene; 1,1-bis(methoxymethyl)-4-phenylindene; 1,1-bis(methoxymethyl)-4-phenyl-2-methylindene; 1,1-bis(methoxymethyl)-4-cyclohexylindene;
1,1-bis(methoxymethyl)-7-(3,3,3-trifluoropropyl)indene;
1,1-bis(methoxymethyl)-7-trimethylsilylindene;
1,1-bis(methoxymethyl)-7-trifluoromethylindene;
1,1-bis(methoxymethyl)-4,7-dimethyl-4,5,6,7-tetrahydroindene; 1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene; 1,1-bis(methoxymethyl)-2-phenylindene;
1,1-bis(methoxymethyl)-1H-benz[e]indene;
1,1-bis(methoxymethyl)-1H-2-methylbenz[e]indene; 9,9-bis(methoxymethyl)fluorene;
9,9-bis(methoxymethyl)-2,3,6,7-tetramethylfluorene; 9,9-bis(methoxymethyl)-2,3,4,5,6,7-hexafluorofluorene; 9,9-bis(methoxymethyl)-2,3-benzofluorene; 9,9-bis(methoxymethyl)-2,3,6,7-dibenzofluorene; 9,9-bis(methoxymethyl)-2,7-diisopropylfluorene; 9,9-bis(methoxymethyl)-1,8-dichlorofluorene; 9,9-bis(methoxymethyl)-2,7-dicyclopentylfluorene; 9,9-bis(methoxymethyl)-1,8-difluorofluorene; 9,9-bis(methoxymethyl)-1,2,3,4-tetrahydrofluorene; 9,9-bis(methoxymethyl)-1,2,3,4,5,6,7,8-octahydrofluorene; 9,9-bis(methoxymethyl)-4-tert-butylfluorene.

As explained above, the catalyst component (a) comprises, in addition to the above electron donors, a titanium compound having at least a Ti-halogen bond and a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are TiCl₄ and TiCl₃; furthermore, also Ti-haloalcoholates of formula Ti(OR)_{n-y}X_{y} can be used, where n is the valence of titanium, y is a number between 1 and n-1 X is halogen and R is a hydrocarbon radical having from 1 to 10 carbon atoms.

Preferably, the catalyst component (a) has an average particle size ranging from 15 to 80 µm, more preferably from 20 to 70 µm and even more preferably from 25 to 65 µm. As explained the succinate is present in an amount ranging from 40 to 90% by weight with respect to the total amount of donors. Preferably it ranges from 50 to 85% by weight and more preferably from 65 to 80% by weight. The 1,3-diether preferably constitutes the remaining amount.

The alkyl-Al compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt₂Cl and Al₂Et₃Cl₃.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula Rₐ⁵R_{b}⁶Si(OR⁷)_{c}, where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metildimethoxysilane. The external electron donor compound is used in such an amount to give a molar ratio between the organo-aluminum compound and said electron donor compound of from 5 to 500, preferably from 5 to 400 and more preferably from 10 to 200.

The catalyst forming components can be contacted with a liquid inert hydrocarbon solvent such as, e.g., propane, n-hexane or n-heptane, at a temperature below about 60°C and preferably from about 0 to 30°C for a time period of from about 6 seconds to 60 minutes.

The above catalyst components (a), (b) and optionally (c) can be fed to a pre-contacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably, step (i)a is carried out in the absence of inert hydrocarbon solvents.

The average residence time in this reactor generally ranges from 2 to 40 minutes, preferably from 10 to 25 minutes. The temperature ranges between 10°C and 50°C, preferably between 15°C and 35°C. Adopting these conditions allows to obtain a pre-polymerization degree in the preferred range from 60 to 800g per gram of solid catalyst component, preferably from 150 to 500 g per gram of solid catalyst component. Step (i)a is further characterized by a low concentration of solid in the slurry, typically in the range from 50 g to 300 g of solid per liter of slurry.

The slurry containing the catalyst, preferably in pre-polymerized form, is discharged from the pre-polymerization reactor and fed to a gas-phase or liquid-phase polymerization reactor. In case of a gas-phase reactor, it generally consists of a fluidized or stirred, fixed bed reactor or a reactor comprising two interconnected polymerization zones one of which, working under fast fluidization conditions and the other in which the polymer flows under the action of gravity. The liquid phase process can be either in slurry, solution or bulk (liquid monomer). This latter technology is the most preferred and can be carried out in various types of reactors such as continuous stirred tank reactors, loop reactors or plug-flow ones. The polymerization is generally carried out at temperature of from 20 to 120°C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa. Preferably, the polymerization step is carried out by polymerizing propylene in liquid monomer, more preferably in loop reactor, to give the required propylene polymer.

In this stage, hydrogen can be used as a molecular weight regulator.

The fibers of the invention typically exhibit a value of tenacity at least equal to or higher than 25 cN/tex, preferably higher than 26 cN/tex, and a value of elongation at break at least equal to or higher than 250%, preferably equal to or higher than 300%.

Typically, the fibers according to the present invention have a titre ranging from 1 to 8 dtex, preferably from 1.5 to 4.0 dtex.

The fibers of the present invention can be efficiently spun at speeds that are typically higher than 3000 m/min, preferably higher than 3300 m/min, more preferably higher than 3500 m/min.

The fibers of the invention can be spun at temperatures generally varying from 200° to 300° C. Preferably, the spinning temperature is lower than 250°C, even more preferably, the spinning temperature is comprised between 230° and 250°C.

The fibers of the present invention can be used for the manufacture of non-woven fabrics showing excellent properties.

Such non-woven fabrics may be produced with various methods, preferably through the well-known spunbonding technique. The spunbonding process is a non-woven manufacturing technique, whereby polymers are directly converted into endless filaments and stochastically deposited to form a non-woven material.

Thus a further object of the present invention is a spunbonded non-woven fabric manufactured with the fibers of the invention.

The fibers of the present invention can also contain formulations of stabilizers suited for obtaining a skin-core structure (skin-core stabilization), or a highly stabilizing formulation. In the latter case, a superior resistance to aging is achieved for durable nonwovens.

Fibers or filaments comprising the propylene polymers of the invention can be prepared using processes and apparatuses well known in the art, i.e. by melt-spinning the propylene polymers in conventional devices suitable for producing single or composite fibers. The propylene polymers of the invention show an extremely good spinnability, i.e. they can be spun into fibers or filaments at high spinning speeds without breaking, and resulting at the same time in fibers or filaments which retain good mechanical properties, i.e. high tenacity and high elongation at break.

As mentioned above, the fibers of the present invention are particularly suited for preparing articles, such as non-woven fabrics, in particular spunbonded non-woven fabrics.

The spunbonding process combines the fiber spinning and the web formation into a single production process. Fibers are formed as the molten polymer exits the spinnerets, normally quenched by cool air and the filaments are pulled away from the spinneret by high pressure air. Then the filaments are deposited onto a moving belt forming a non-woven fabric. The fabric weight is determined by the throughput per spinneret hole, the number of holes and the speed of the moving belt. Subsequently, the fabric can be bonded by different methods, such as thermal bonding, chemical bonding or needle punching, thermal bonding being preferred. By thermal bonding the fabric is passed between calender rolls heated at a temperature normally comprised in the range from 110° to 150°C, preferably from 120° to 130°C.

The thermally bonded articles may comprise two or more non-woven layers. Thanks to the use of the fibers of the present invention a good adhesion among the layers is obtained.

The following examples are given to illustrate the present invention without any limiting purpose.

### Methods

The characterization data for the propylene polymers and for the obtained films were obtained according to the following methods:

### Melt flow rate (MFR)

Determined according to ISO 1133 (230°C, 2.16 Kg).

### Xylene Solubles (XS)

Determined as follows: 2.5 g of polymer and 250 ml of xylene are introduced in a glass flask equipped with a refrigerator and a magnetical stirrer. The temperature is raised in 30 minutes up t the boiling pint of the solvent. The so obtained clear solution is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

### Molecular weight (M̅ₙ, M̅_{w}, M̅_{z})

Measured by way of gel permeation chromatography (GPC) in 1,2,4-trichlorobenzene.

### Titre of filaments

From a 10 cm long roving, 50 fibers are randomly chosen and weighed. The total weight of the 50 fibers, expressed in mg, is multiplied by 2, thereby obtaining the titre in dtex.

### Tenacity and Elongation at break of filaments

From a 500 m roving a 100 mm-long segment is cut and single fibers randomly chosen. Each single fiber is fixed to the clamps of a Dynamometer and tensioned to break with a traction speed of 20 mm/min for elongations lower than 100% and 50 mm/min for elongations greater than 100%, the initial distance between the clamps being of 20 mm. The ultimate strength (load at break) and the elongation at break are determined in machine (MD) direction. The tenacity is calculated by way of the following equation:
Tenacity = Ultimate strength (cN) x 10/Titre (dtex).

### Examples

### Examples 1 and 2

### Preparation of the solid catalyst component

Into a 500 mL four-necked round flask, purged with nitrogen, 250 mL of TiCl₄ were introduced at 0°C. While stirring, 10.0 g of microspheroidal MgCl₂·2.1C₂H₅OH having average particle size of 47µm (prepared in accordance with the method described in example 1 of EP728769, an amount of diethyl 2,3-diisopropylsuccinate such as to have a Mg/succinate molar ratio of 15 was added. The temperature was raised to 100°C and kept at this value for 60 min. After that the stirring was stopped, the liquid was siphoned off. After siphoning, fresh TiCl₄ and an amount of 9,9-bis(methoxymethyl)fluorene such as to have a Mg/diether molar ratio of 30 were added. Then the temperature was raised to 110°C and kept for 30 minutes under stirring. After sedimentation and siphoning at 85°C, fresh TiCl4 was added. Then the temperature was raised to 90°C for 15min. After sedimentation and siphoning at 90°C the solid was washed six times with anhydrous hexane (6 x 100 ml) at 60 °C.

### Preparation of the catalyst system

Before introducing it into the polymerization reactors, the solid catalyst component described above was contacted with aluminum-triethyl (TEAL) and cyclohexyl-methyl-dimethoxysilane (CHMMS) at a temperature of 15°C under the conditions reported in Table 1.

### Prepolymerization

The catalyst system was then subject to prepolymerization treatment at 20°C by maintaining it in suspension in liquid propylene for a residence time of 9 minutes before introducing it into the polymerization reactor.

### Polymerization

The polymerization was carried out in continuous mode in a liquid phase loop reactor. Hydrogen was used as molecular weight regulator.

The main polymerization conditions are reported in Table 1. The analytical data relating to the polymers produced are reported in Table 2.

### Example 3

### Preparation of the solid catalyst component

Into a 500 mL four-necked round flask, purged with nitrogen, 250 mL of TiCl₄ were introduced at 0°C. While stirring, 10.0 g of microspheroidal MgCl₂·2.1C₂H₅OH having average particle size of 47µm (prepared in accordance with the method described in example 1 of EP728769, an amount of diethyl 2,3-diisopropylsuccinate such as to have a Mg/succinate molar ratio of 24 was added. The temperature was raised to 110°C and kept at this value for 60 min. After that the stirring was stopped, the liquid was siphoned off. After siphoning, fresh TiCl₄ and an amount of 9,9-bis(methoxymethyl)fluorene such as to have a Mg/diether molar ratio of 12 were added. Then the temperature was raised to 100°C and kept for 30 minutes under stirring. After sedimentation and siphoning at 75°C, fresh TiCl4 was added. Then the temperature was raised to 90°C for 15min. After sedimentation and siphoning at 75°C the solid was washed six times with anhydrous hexane (6 x 100 ml) at 60 °C.

With the thus obtained solid catalyst component a catalyst system was prepared that was then subjected to prepolymerization and thereafter used in polymerization, all according to the procedure described in examples 1-2 except that two loop reactors arranged in series were used for the polymerization.

The main polymerization conditions are reported in Table 1. The analytical data relating to the polymers produced are reported in Table 2.

### Comparative example 4

A visbroken polypropylene was prepared as in Examples 1-2, but using as a polypropylene precursor a commercial polypropylene Moplen HP561R (LyondellBasell) obtained from a phthalate-containing Ziegler-Natta catalyst and designed for the production of fibers.

The analytical data relating to the obtained polypropylene are reported in Table 2.

### Comparative example 5

### Preparation of the solid catalyst component

Into a 500 mL four-necked round flask, purged with nitrogen, 250 mL of TiCl₄ were introduced at 0°C. While stirring, 15.0 g of microspheroidal MgCl₂·1.8C₂H₅OH having average particle size of 72 µm (prepared in accordance with the method described in example 1 of EP728769), an amount of diethyl 2,3-diisopropylsuccinate such as to have a Mg/succinate molar ratio of 10,5 was added. The temperature was raised to 110°C and kept at this value for 60 min. Then, the stirring was stopped, the solid was sedimented and the liquid siphoned off at 100°C. After siphoning, fresh TiCl₄ and an amount diethyl 2,3-diisopropylsuccinate such as to have a Mg/succinate molar ratio of 21 was added. Then the temperature was raised to 120°C and kept for 30 minutes under stirring. After sedimentation and siphoning at 100°C, fresh TiCl4 was added. Then the temperature was raised to 120°C for 30min. After sedimentation and siphoning at 100°C the solid was washed six times with anhydrous hexane (7 x 100 ml) at 60 °C.

### Preparation of the catalyst system

Before introducing it into the polymerization reactors, the solid catalyst component described above was contacted with aluminum-triethyl (TEAL) and dicyclopentyl-dimethoxysilane (DCPMS) at a temperature of 15°C under the conditions reported in Table 1.

### Prepolymerization

The catalyst system was then subject to prepolymerization treatment at 25°C by maintaining it in suspension in liquid propylene for a residence time of 10 minutes before introducing it into the polymerization reactor.

### Polymerization

The polymerization was carried out in continuous mode in a polymerization plant comprising a polymerisation apparatus as described in EP 1 012 195. Hydrogen was used as molecular weight regulator. The hydrogen concentration is kept at the same concentration in both riser and downcomer

The main polymerization conditions are reported in Table 1. The analytical data relating to the obtained polypropylene are reported in Table 2.

**Table 1 - Polymerization conditions**

| | | **Ex.1** | **Ex.2** | **Ex.3** | **Ex.5 (Comp.)** |
|---|---|---|---|---|---|
| External Donor | | CHMMS | CHMMS | CHMMS | DCPMS |
| TEAL/Donor | | 132 | 176 | 198 | 5 |
| TEAL/C3- | | 0.09 | 0.14 | 0.16 | 0.14 |
| Temperature | °C | 75 | 75 | 75*/75** | 80 |
| Residence time | min | 54 | 63 | 55*/40** | 81 |
| H2 fed conc | mol ppm | 590 | 540 | 550*/550** | - |
| H2/C3- | | - | - | - | 0.035 |
| Mileage | Kg/g | 55 | 48 | 60 | 22 |

| | | | | | |
|---|---|---|---|---|---|
| * = in first loop reactor; ** = in second loop reactor | | | | | |

**Table 2 - Polymer characteristics**

| | | **Ex.1** | **Ex.2** | **Ex.3** | **Ex.4 (Comp.)** | **Ex.5 (Comp.)** |
|---|---|---|---|---|---|---|
| MFR1 (precursor) | g/10' | 1.75 | 2.5 | 1.7 | 1.8 | 1.5 |
| XS1 (precursor | wt% | 3.1 | 3.0 | 3.0 | 3.5 | 2.0 |
| MFR2 | g/10' | 22.6 | 21.5 | 27 | 25.0 | 24.0 |
| XS2 | wt% | 3.5 | 3.2 | 3.4 | 3.6 | 2.1 |
| Mw/Mn | | 4 | 3.9 | 3.5 | 3.6 | 9.7 |
| Mz / Mw | | 2.1 | 2.1 | 2 | 2 | 4.8 |

### Examples 6-8 and comparative examples 9 and 10

Propylene polymers of example 1-4 are extruded in the presence of the following additives: calcium stearate, Irganox^{®} B215 (traded by Ciba Specialty Chemicals), Trigonox^{®} 101, a peroxide traded by Akzo, in the quantities reported in table 3.

**Table 3**

| Example: | | 6 | 7 | 8 | 9 (comp.) | 10 (comp.) |
|---|---|---|---|---|---|---|
| Precursor polymer from example: | | 1 | 2 | 3 | 4 (comp.) | 5 (comp.) |
| calcium stearate | wt% | 0.028 | 0.028 | 0.4 | 0.028 | 0.028 |
| Irganox^{®} B215 | wt% | 0.0475 | 0.0475 | 0.15 | 0.0475 | 0.0475 |
| Trigonox^{®} | wt% | 0.057 | 0.05 | 0.083 | 0.05 | 0.08 |

A conventional twin screw extruder Coperion Werner & Pfleiderer ZSK58 MC is used with operating conditions as follows: screw speed of 260 rpm, extruder throughput of 250 Kg/h, specific energy of 0.183 kwh/kg, melt temperature of 214 °C, die pressure of 51 bar, melt filter of 200 mesh.

### Production of fibers

After extrusion the polymers are spun in a Leonard 25 spinning pilot line with screw L/D ratio of 25, screw diameter of 25 mm and compression ratio of 1:3. The line is marketed by Costruzioni Meccaniche Leonard-Sumirago (VA). The operative spinning conditions and properties of the filaments are reported in Table 4.

**Table 4**

| Example | 6 | 7 | 8 | 9 (comp.) | 10 (comp.) |
|---|---|---|---|---|---|
| Hole diameter (mm) | 0.6 | 0.6 | 0.6 | 0.6 | 0.6 |
| Output per hole g/min | 0.6 | 0.6 | 0.6 | 0.6 | 0.6 |
| Hole number in the die | 37 | 37 | 37 | 37 | 37 |
| Die temperature (°C) | 250 | 250 | 250 | 250 | 250 |
| Melt temperature (°C) | 258 | 258 | 258 | 258 | 258 |
| Maximum Spinning Speed (m/min) | 3900 | 3300 | 3900 | 4500 | 3600 |
| Tenacity (cN/tex) | 26.3 | 26.9 | 27.3 | 24.8 | 24.5 |
| Elongation at break (%) | 300 | 320 | 260 | 255 | 220 |
| Titre (dTex) | 2.2 | 2.25 | 2.2 | 2.2 | 2.2 |

Table 4 shows that the fibers of the invention are endowed with improved tenacity and elongation at break.

## Claims

1. A fiber comprising a polypropylene obtainable by a process comprising the steps of:
(iv)polymerizing propylene in the presence of a catalyst system comprising the product obtained by contacting the following components:
(d) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(e) an aluminum hydrocarbyl compound, and
(f) optionally an external electron donor compound, to obtain a polypropylene precursor having a melt flow rate MFR1;
(v) subjecting the thus-obtained polypropylene precursor to visbreaking to obtain a visbroken polypropylene having a melt flow rate MFR2;
(vi) spinning the visbroken polypropylene obtained in the previous step;
wherein MFR2 is comprised between from 15 to 40 g/10min, the ratio MFR2/MFR1 is comprised between 8 and 18, both MFR1 and MFR2 being measured according to ISO method 1133 (230° C, 2.16 kg).

2. The fiber according to claim 1, wherein the melt flow rate after visbreaking (MFR2) is comprised between 20 and 30 g/10', preferably between 22 and 25 g/10'.

3. The fiber according to any of the preceding claims, wherein the ratio MFR2/MFR1 of melt flow rates after/before visbreaking is comprised between 10 and 15, preferably between 12 and 14.

4. The fiber according to any of the preceding claims, wherein the xylene insolubility is higher than 95%, preferably higher than 96%, more preferably higher than 97%.

5. The fiber according to any of the preceding claims, having a molecular weight distribution, expressed by the M̅w/M̅n ratio, measured by GPC, comprised between 3.0 and 12.0, preferably between 3.5 and 7.0.

6. The fiber according to any of the preceding claims, having a value of M̅z/M̅w ratio, measured by GPC, comprised between 1.0 and 3.0, preferably between 1.5 and 2.5.

7. The fiber according to any of the preceding claims, wherein the polypropylene is a homopolymer, optionally containing minor amounts of comonomer units deriving from ethylene and/or other alpha-olefins such as C4-C10 alpha-olefins in amount ranging from 0.1 to 2% by weight, preferably from 0.2 to 1.5% by weight.

8. The fiber according to any of the preceding claims, exhibiting a value of tenacity at least equal to or higher than 25 cN/tex, preferably higher than 26 cN/tex,

9. The fiber according to any of the preceding claims, exhibiting a value of elongation at break at least equal to or higher than 250%, preferably equal to or higher than 300%.

10. A spunbonded non-woven fabric manufactured with the fibers according to any of the preceding claims.
